# EUROPÄISCHE PATENTANMELDUNG

(11) **EP 3 139 459 A1**
(43) Veröffentlichungstag der Anmeldung: **08.03.2017**
(21) Anmeldenummer: 15183403.3
(22) Anmeldetag: 01.09.2015
(51) Int. Cl.: H02G 3/04, H02G 3/30, H02G 3/08

(54) **KABELINSTALLATIONSVORRICHTUNG MIT FUNKTIONSERHALT IM BRANDFALL**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Die Kabelinstallationsvorrichtung (1), die für die Installation von Kabel und Leitungen (9) in Steigzonen vorgesehen und zur Sicherung des Funktionserhalts dieser Kabel und Leitungen (9) im Brandfall vorgesehen ist, umfasst ein Querprofil (11), das vereinzelt oder verbunden mit Längsprofilen (110) mit einer Gebäudewand (6) verbindbar ist und das dem Halten von Befestigungsvorrichtungen (8) dient, mittels denen die Kabel und Leitungen (9) installierbar sind. Erfindungsgemäss sind die Befestigungsvorrichtungen (8) und das zugehörige Querprofil (11) innerhalb eines Gehäuses (4) angeordnet, welches aus feuerfestem Material besteht. Ferner sind zwei Durchgangsöffnungen (40A, 40B) mit je einer Kabeldichtung (3) vorgesehen, die aus feuerfestem und flexiblem Material bestehen und durch die die Kabel und Leitungen (9) dicht umschlossen in das Gehäuse (4) hinein zu den Befestigungsvorrichtungen (8) und wieder aus dem Gehäuse (4) hinaus führbar sind.

## Beschreibung

Die Erfindung betrifft eine Kabelinstallationsvorrichtung für Steigzonen mit Funktionserhalt im Brandfall.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in Kabelinstallationsvorrichtungen, wie Kabelkanälen oder Kabelpritschen, gelegt und so z.B. von einem Schaltfeld oder einer Zentrale zu den Verbrauchern geführt.

Zur Versorgung der einzelnen Geschosse eines Gebäudes werden die Strom-, Steuer-, Kommunikationskabel und gegebenenfalls weitere Kabel und Leitungen in Steigzonen von einem ersten zu einem zweiten Geschoss geführt und an Vorrichtungen installiert, wie sie in [1], Produktkatalog der LANZ OENSINGEN AG, Juni 2009; auf Seiten 88 bis 95 gezeigt sind.

Diese Kabelinstallationsvorrichtungen für Steigzonen weisen Querprofile oder Sprossen auf, an denen Kabel und Leitungen anhand von Befestigungsmitteln, z.B. Schnellverlegern, montiert werden. Die Querprofile, die ein zum Halten der Befestigungsmittel geeignetes Profil aufweisen, sind dabei quer zur Längsachse der Kabel und Leitungen ausgerichtet. Die Querprofile werden direkt mit der Wand verbunden oder sind von Längsprofilen gehalten, die mit der Wand verbunden werden. Diese Kabelinstallationsvorrichtungen sind in der Lage, auch schwere Kabel und Leitungen sicher zu halten.

Durch die Medienversorgung durch Kabel und Leitungen, die in Kabelinstallationsvorrichtungen gehalten sind, wird dafür gesorgt, dass alle angeschlossenen Geräte, insbesondere auch alle Geräte und Vorrichtungen der Gebäudetechnik und der Sicherheitstechnik, wie Aufzüge, Klimatechnik, Beleuchtung, Alarmsysteme, Brandmeldeanlagen, etc. deren Funktionen erfüllen können.

Anlagen müssen insbesondere im Brandfall zwingend funktionieren, um Notfallmassnahmen und Evakuierungen ungehindert ausführen zu können. Bis zum Abschluss dieser Massnahmen sollen die Energieversorgung über die Kabelkanäle und die Funktionen der genannten Geräte und Vorrichtungen erhalten bleiben. Insbesondere in öffentlichen Gebäuden, Spitälern, Einkaufszentren, Schulen, Hotels und Industrieanlagen werden daher Kabelkanäle und Kabel eingesetzt, die für den Funktionserhalt im Brandfall ausgelegt sind.

In der DIN 4102 wird der Funktionserhalt von Kabelkanälen in Klassen unterteilt. Die Klassenbezeichnung richtet sich wie folgt nach der Dauer innerhalb der der Funktionserhalt gewährleistet ist:
E30 - Funktionserhalt von 30 Minuten
E60 - Funktionserhalt von 60 Minuten
E90 - Funktionserhalt von 90 Minuten

Kabel und Leitungen, die für den Funktionserhalt im Brandfall eingesetzt werden, weisen ein Brennverhalten nach IEC 60332-1 (flammwidrig) oder IEC 60332-3 (hoch flammwidrig) auf. Ein Hersteller solcher Kabel ist z.B. LAPP engineering, CH-6330 Cham.

Diese Kabel werden nach den Normen BS6387 & SS 299 auf Widerstandsfähigkeit auf Feuer, auf Feuer in Kombination mit Wassereinwirkung, sowie auf Feuer in Kombination mit mechanischen Einwirkungen getestet. Mechanische Einwirkungen resultieren u.a. aus der Deformation des Kabelkanals, in dem die Kabel eingelegt sind. Wesentlich ist daher, dass der Kabelkanal und die eingelegten Kabel in Kombination den Funktionserhalt im Brandfall während der vorgeschriebenen Dauer gewährleisten.

Im Brandfall und auch bei der Prüfung auf Funktionserhalt im Brandfall werden horizontal ausgerichtete Kabelkanäle hohen Temperaturen ausgesetzt. Dabei soll gewährleistet bleiben, dass sich die Kabelkanäle nicht unzulässig Deformieren und die die eingelegten Kabel während der angegebenen Dauer zuverlässig gehalten und nicht deformiert werden.

In Steigzonen unterbleibt die Deformation der Kabelinstallationsvorrichtungen. Trotzdem treten im Brandfall gerade in Steigzonen häufiger Funktionsausfälle auf.

Der vorliegenden Erfindung liegt daher die Aufgabe zugrunde, eine Kabelinstallationsvorrichtung für Steigzonen mit verbessertem Funktionserhalt im Brandfall zu schaffen.

Die Kabelinstallationsvorrichtung soll es erlauben, typischerweise vertikal verlaufende Kabel und Leitungen auch in Steigzonen derart zu installieren, dass im Brandfall die Funktion der Kabel und Leitungen länger aufrechterhalten werden kann. Die Kabelinstallationsvorrichtung soll diesbezüglich mit geringem zusätzlichem Aufwand eine deutliche Verbesserung herbeiführen.

Dabei sollen die Kabel und Leitungen in jeder Phase des Brandfalls besser geschützt bleiben, sodass im Brandfall eine erhöhte Fehlerhäufigkeit in Steigzonen mit relativ einfachen Massnahmen vermieden werden kann.

Diese Aufgabe wird mit einer Kabelführungsvorrichtung für Steigzonen gelöst, welcher die in Anspruch 1 angegebenen Merkmale aufweist. Vorteilhafte Ausgestaltungen der Erfindung sind in weiteren Ansprüchen angegeben.

Die Kabelinstallationsvorrichtung, die für die Installation von Kabel und Leitungen in Steigzonen und zur Sicherung des Funktionserhalts dieser Kabel und Leitungen im Brandfall vorgesehen ist, umfasst ein vorzugsweise aus Metall gefertigtes Querprofil, das vereinzelt oder verbunden mit Längsprofilen mit einer Gebäudewand verbunden oder verbindbar ist und das dem Halten von Befestigungsvorrichtungen dient, mittels denen die Kabel und Leitungen installierbar sind.

Erfindungsgemäss sind die Befestigungsvorrichtungen und das zugehörige Querprofil innerhalb eines Gehäuses angeordnet, welches aus feuerfestem Material besteht. Ferner sind zwei Durchgangsöffnungen mit je einer Kabeldichtung vorgesehen, die aus feuerfestem und flexiblem Material bestehen und durch die die Kabel und Leitungen dicht umschlossen in das Gehäuse hinein zu den Befestigungsvorrichtungen und wieder aus dem Gehäuse hinaus führbar sind.

Mit der erfindungsgemässen Kabelinstallationsvorrichtung kann der Funktionserhalt im Brandfall wesentlich besser gesichert werden, als mit konventionellen Installationsvorrichtungen. Dies überrascht, da die konventionellen Installationsvorrichtungen im Brandfall keiner wesentlichen Deformation unterliegen und das Halten der Kabel und Leitungen gesichert ist. Zur verbesserten Sicherung des Funktionserhalts im Brandfall wäre daher zuerst zu überlegen, ob nicht die Kabel und Leitungen als Ganzes in feuerhemmendes Material eingebettet werden sollten, da es aus der Sicht des Fachmanns wohl kaum sinnvoll ist, nur einen Teil der Kabel und Leitungen zu schützen, während der andere Teil dem Feuer ausgesetzt ist. Es wäre anzunehmen, dass das Kabel und die Leitungen an den freiliegenden Stellen zerstört würde, was den Nutzen einer nur abschnittweisen Wärmeisolation infrage stellt. Dabei ist zu beachten, dass die vollständige Isolation der Kabel und Leitungen mit einem erheblichen Mehraufwand verbunden ist.

Der Erfindung liegt hingegen die Überlegung zugrunde, dass Kabel und Leitungen in Kabelkanälen über die gesamte Länge gestützt und somit nur geringen Krafteinwirkungen ausgesetzt sind. Im Bereich der Steigzonen resultieren andere Krafteinwirkungen auf die Kabel. Die Kabel sind dort nicht flächig gelagert, sondern praktisch punktuell z.B. mit einem Schnellverleger an einer Sprosse befestigt und aufgehängt. Die Gewichtskraft der unter Umständen sehr schweren Leitungen wirkt daher am Befestigungspunkt auf die Leitung ein, was bei ungestörten Verhältnissen unproblematisch ist. Untersuchungen haben jedoch gezeigt, dass die Kabel und Leitungen im Brandfall geschwächt werden, weshalb zuerst an den Punkten mit grosser Krafteinwirkung und somit an den Montagepunkten die ersten Störungen auftreten. Zu beachten ist, dass die Eigenschaften der verwendeten Kabelmaterialien, insbesondere des Kabelmantels, während der Brandeinwirkung ändern. Zuerst besteht die Gefahr, dass Isolationsschichten schmelzen und unter Krafteinwirkung von den Kabelleitern gelöst werden. Falls die Kabel und Leitungen diese Phase überdauern, so wird der Kabelmantel petrifiziert und somit hart und spröde. In diesem Fall können Krafteinwirkungen und Schläge auf die Kabel und Leitungen dazu führen, dass Isolationsschichten abgesprengt werden. In beiden oben beschriebenen Vorgängen, der elastischen Deformation des Kabelmantels unter Krafteinwirkung und der Zersplitterung des petrifizierten Kabelmantels unter Krafteinwirkung, besteht die Gefahr, dass die Funktionsfähigkeit der Kabel und Leitungen aufgehoben wird und Kurzschlüsse auftreten können.

Durch die erfindungsgemässe Kabelinstallationsvorrichtung werden die Kabel und Leitungen an den Stellen geschützt und elastisch gehalten, an denen grössere Krafteinwirkungen auf die Kabel und Leitungen einwirken. Im Brandfall bleiben die Kabel und Leitungen an diesen Stellen somit über lange Zeit geschützt und ohne wesentliche Änderungen der Kabeleigenschaften gehalten, weshalb die Krafteinwirkungen an diesen Stellen über längere Zeit unkritisch sind und die Häufigkeit der Fehler an diesen Punkten signifikant reduziert werden kann.

In einer ersten Ausgestaltung der Erfindung wird ein aus einem oder mehreren Rahmenelementen bestehender Profilrahmen vorgesehen, welcher das Querprofil umrahmt und das Gehäuse von der Gebäudewand trennt. Dieser Profilrahmen bildet vorzugsweise einen Sockel, auf den das Gehäuse der Kabelinstallationsvorrichtung aufgesetzt werden kann. Der Profilrahmen kann durchgehend ausgebildet oder unterbrochen sein, falls die Querprofile mit Längsprofilen verbunden sind. Die erfindungsgemässe Kabelinstallationsvorrichtung kann in einer Steigzone daher punktuell oder mittels einer konventionellen Montagevorrichtung aufgebaut werden, die erfindungsgemässe Querprofile und Längsprofile umfasst.

Das Gehäuse besteht vorzugsweise aus einem oder mehreren Gehäuseelementen. Das Gehäuse kann in einem Stück von einem spezialisierten Hersteller gefertigt oder durch Zuschnitt von feuerfesten Platten modular zusammengesetzt werden. Das Gehäuse oder die Gehäuseelemente werden vorzugsweise aus zementgebundenem Calciumsilicat gefertigt.

Vorzugsweise wird ein Gehäuse mit einem Deckel vorgesehen, der abgenommen werden kann, sodass der Installateur Zugriff zu den Befestigungsmitteln erhält und einzelne Kabel lösen oder fixieren kann.

Die Durchgangsöffnungen sind vorzugsweise auf der Oberseite und der Unterseite des Gehäuses vorzugsweise angrenzend an den Profilrahmen vorgesehen und erstrecken sich vorzugsweise von einer zur anderen Seite des Gehäuses oder zwischen zwei einander gegenüberliegenden Gehäuseelementen. Vorzugsweise sind schlitzförmige Durchgangsöffnungen vorgesehen, die leicht abgedichtet werden können.

Die Kabeldichtungen in den Durchgangsöffnungen umfassen vorzugsweise je zwei quaderförmige Dichtungselemente, von denen eines vorzugsweise am Profilrahmen und das andere am Gehäuse anliegt. Die flexiblen Dichtungselemente sind vorzugsweise aus Hochtemperaturwolle gefertigt, die vorzugsweise Elemente aus der Gruppe von Mineralwolle, Aluminiumoxid, Siliziumsoxid, Molut oder Korund, oder Kombinationen davon aufweist. Derartig gefertigte Dichtungselemente sind sehr flexibel bzw. stark komprimierbar und erlauben Kabel und Leitungen mit unterschiedlichen Durchmessern innerhalb den Durchgangsöffnungen dicht zu umschliessen. Der Zutritt von Feuer und Hitze in das Gehäuse ist daher zuverlässig unterbunden.

Die Durchgangsöffnungen sind derart dimensioniert und die Dichtungselemente sind derart gewählt, dass Kabel und Leitungen vorzugsweise parallel nebeneinander darin installierbar sind, deren Durchmesser sich z.B. um einen Faktor im Bereich von 10 bis 20 voneinander unterscheiden. Die Durchmesser der Kabel und Leitungen liegen vorzugsweise in einem Bereich zwischen 5 mm und 30 mm.

Die Querprofile und die Befestigungsvorrichtungen sind aneinander angepasst. Vorzugsweise werden Querprofile oder Profilstäbe verwendet, die ein C-Profil aufweisen, in die die Befestigungsvorrichtungen eingehängt werden können. Z.B. werden Befestigungsvorrichtungen oder Schnellverleger verwendet, die in das Querprofil eingehängt werden können und das gehaltene Kabel oder die Leitung mittels einer Feder gegen das Querprofil drücken. Derartige Befestigungsvorrichtungen oder Schnellverleger sind aus [1] oder der [2], EP1530272A1, bekannt. Die Befestigungsvorrichtungen können auch Schrauben aufweisen, mittels denen eine Andruckplatte gegen ein gehaltenes Kabel oder eine Leitung angedrückt werden kann.

Zur Montage der Kabelinstallationsvorrichtung werden vorzugsweise zwei Schraubverbindungen verwendet, mit denen ein Querprofil an der Gebäudewand fixierbar ist. Vorzugsweise wird das Querprofil beidseits mit je einem Segmentanker oder einem Dübel an der Gebäudewand befestigt, der ein Gewindeteil aufweist, auf das eine Gewindehülse gegen das Querprofil gedreht werden kann, um dieses zu fixieren. In die Gewindehülse wird eine Gewindestange eingedreht, die vorzugsweise durch Öffnungen im lösbaren Deckel aus dem Gehäuse geführt und mit einer Schraubenmutter, ggf. einer Flügelmutter, verbunden wird, mittels der das Gehäuse gegen die Gebäudewand gedrückt werden kann. Nach Lösen der Schraubenmuttern kann der Deckel oder das ganze Gehäuse entfernt und auf die Befestigungsmittel zugegriffen werden.

Nachfolgend wird die Erfindung anhand von Zeichnungen exemplarisch erläutert. Dabei zeigt:
- Fig. 1: eine aus [1] bekannte Kabelinstallationsvorrichtung 100 mit drei Querprofilen 11, 11', 11", die, gegebenenfalls verbunden mit Längsprofilen 110, an einer Gebäudewand 6 innerhalb einer Steigzone montiert und mit Befestigungsvorrichtungen 8 verbunden sind, mittels denen vertikal ausgerichtete Kabel und Leitungen 9 gehalten sind;
- Fig. 2: das mittlere Querprofil 11 von Fig. 1 als Teil der erfindungsgemässen Kabelinstallationsvorrichtung 1 von Fig. 4, das von einem feuerfesten Profilrahmen 2 umschlossen ist, der vier Rahmenelemente 21, ..., 24 umfasst;
- Fig. 3: das Querprofil 11 mit dem Rahmenprofil 2 von Fig. 2, auf das auf vertikal übereinander liegenden Rahmenteilen 21, 22 Kabeldichtungen 3A, 3B aufgelegt sind;
- Fig. 4: eine erfindungsgemässe Kabelinstallationsvorrichtung 1 mit dem Querprofil 11, dem Rahmenprofil 2, den Kabeldichtungen 3A, 3B und dem aufgesetzten Gehäuse 4, das vier Seitenwände 41, ..., 44 und eine Abdeckung 45 aufweist, die von zwei Schraubverbindungen 7 gehalten ist; und
- Fig. 5: die Kabelinstallationsvorrichtung 1 von Fig. 4 nach Entnahme der Abdeckung 45 und der oberen Seitenwand 42.

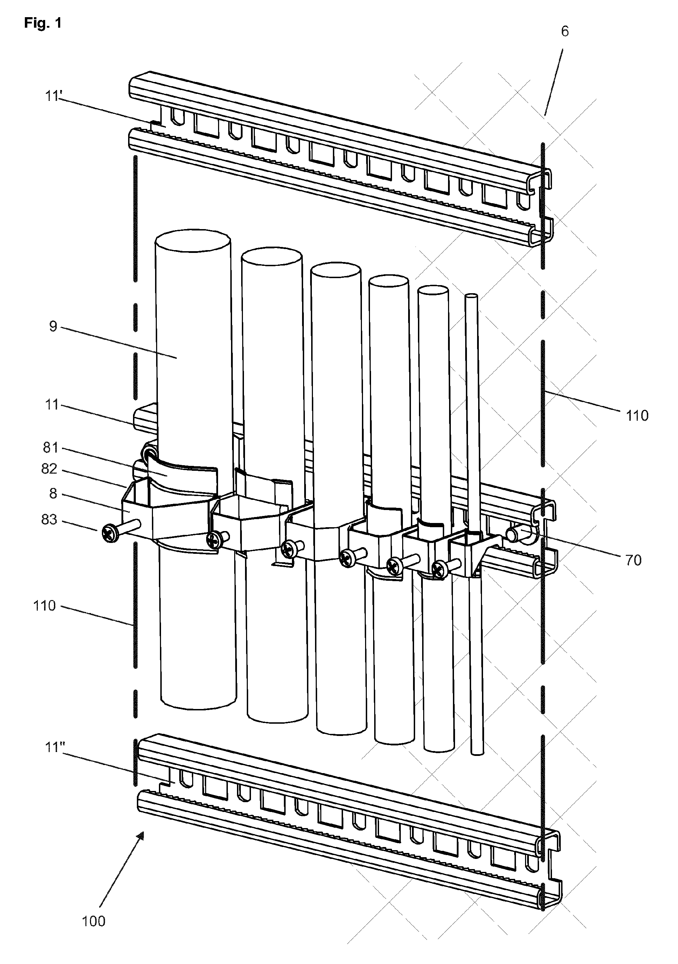

Fig. 1 zeigt exemplarisch eine aus [1] bekannte Kabelinstallationsvorrichtung 100 mit drei Querprofilen 11, 11', 11", die, gegebenenfalls verbunden mit Längsprofilen 110 (schematisch gezeigt), an einer Gebäudewand 6 innerhalb einer Steigzone montiert sind. Die Querprofile 11, 11', 11" können daher vereinzelt mit der Gebäudewand 6 verbunden werden oder Teil von Kabelleitern oder Kabelpritschen sein, die Querprofile 11 und beidseits damit verbundene Längsprofile 110 aufweisen.

Die Querprofile 11, 11', 11" weisen ein C-Profil auf, in die Befestigungsvorrichtungen 8 eingehängt werden können, die in der gezeigten Ausgestaltung der Andruckplatte 81, einen Montagebügel 82 und eine darin gehaltene Andruckschraube 83 umfassen. Der Montagebügel 82 weist ein U-Profil mit zwei Beinen auf, deren Füsse hakenförmig ausgebildet sind und in das Querprofil 11 eingehängt werden können. Der Montagebügel 82 kann daher auf ein Kabel oder eine Leitung 9 aufgesetzt und mit dem Querprofil 11 verbunden werden. In der Folge wird die Andruckplatte z.B. mittels der Anzugschraube 83 oder eine damit verbundene Feder gegen das Kabel oder die Leitung 9 gedrückt. Diese Befestigungsvorrichtungen 8 lassen sich praktisch mit einem Handgriff montieren, weshalb sie in [1] als Schnellverbinder bezeichnet sind.

Die Befestigungsvorrichtungen 8 sind in verschiedenen Grössen erhältlich, sodass, wie in Fig. 1 gezeigt, Kabel und Leitungen mit unterschiedlichen Durchmessern installiert werden können, die sich innerhalb der Steigzonen normalerweise vertikal zwischen den Etagen des Gebäudes erstrecken.

Die Nachteile der in Fig. 1 gezeigten Kabelinstallationsvorrichtung 100 wurden oben beschrieben.

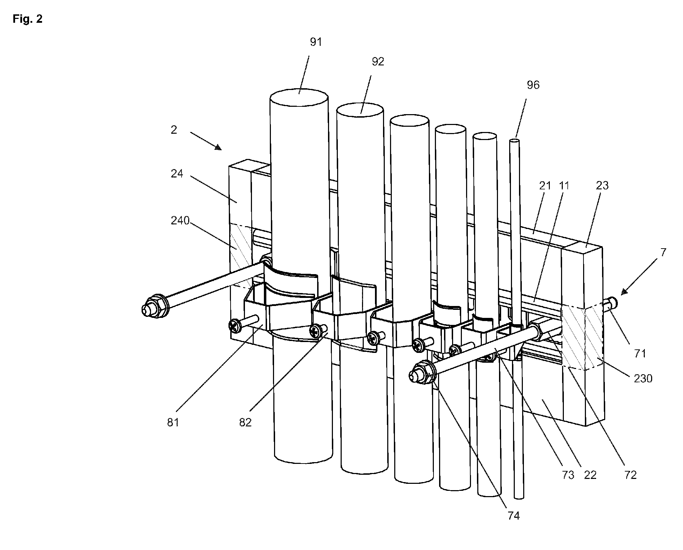

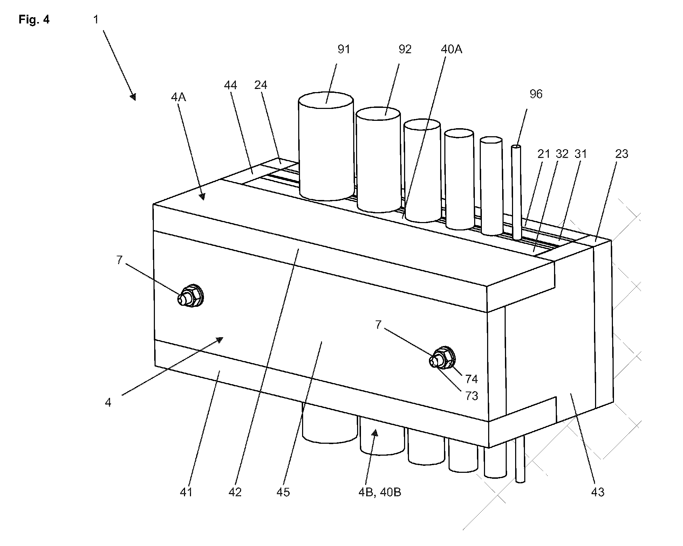

Fig. 2 zeigt das mittlere Querprofil 11 von Fig. 1 als Teil der erfindungsgemässen Kabelinstallationsvorrichtung 1 von Fig. 4. Das Querprofil 11 ist von einem feuerfesten Profilrahmen 2 umschlossen, der vier Rahmenelemente 21, ..., 24 umfasst. Sofern das Querprofil 11 mit Längsprofilen 110 verbunden ist, so weist der Profilrahmen 2 vorzugsweise an den beiden seitlichen Rahmenteilen 23, 24 Durchgänge 230, 240 auf, durch die hindurch das Querprofil 11 vorzugsweise abgedichtet nach aussen zu den Längsprofilen 110 geführt wird. Alternativ können auch Durchgänge für die Längsprofile vorgesehen werden. Das einteilige oder mehrteilige Rahmenprofil 2 erlaubt es, den Bereich um das Querprofil 11 gegenüber der Gebäudewand 6 abzudichten. Das Rahmenprofil 2, welches vorzugsweise aus demselben Material gefertigt ist, wie das Gehäuse 4, dient zusätzlich als Sockel für das Gehäuse 4. Das Rahmenprofil 2 und die zugewandten Enden des Gehäuses 4 sind vorzugsweise derart ausgestaltet, dass sie formschlüssig ineinander eingreifen und eine dicht abgeschlossene Verbindung bilden. Z.B. ist das Rahmenprofil 2 treppenförmig ausgebildet oder weist eine umlaufende Nut auf, die der Aufnahme der angrenzenden Gehäuseteile 41, ..., 44 dient.

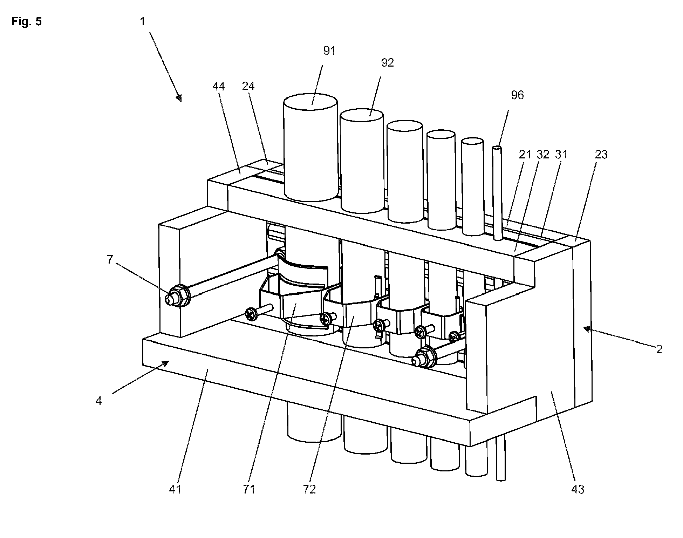

Zur Montage der Kabelinstallationsvorrichtung 1 sind zwei Schraubverbindungen 7 vorgesehen, die einen Segmentanker oder einen Dübel 71 umfassen, mittels dessen das Querprofil 11 an der Gebäudewand 6 befestigt wird. Der Segmentanker 71 weist am freien Ende ein Gewindeteil auf, auf das eine Gewindehülse 72 aufsetzbar ist, die gegen das Querprofil 11 gedreht wird, um dieses zu fixieren. In die Gewindehülse 72 ist eine Gewindestange 73 eingedreht, die vorzugsweise durch Öffnungen im lösbaren Deckel 45 aus dem Gehäuse 4 geführt und mit einer Schraubenmutter 74 verbunden wird, mittels der das Gehäuse 4 gegen die Gebäudewand 6 gedrückt werden kann. Nach Lösen der Schraubenmuttern 74 kann der Deckel 45 oder das ganze Gehäuse 4 entfernt und auf die Befestigungsmittel 8 zugegriffen werden (siehe Fig. 4 und Fig. 5).

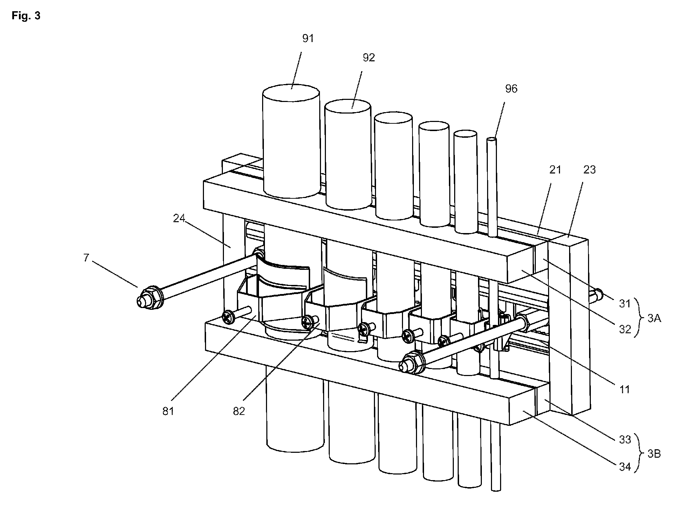

Fig. 3 zeigt das Querprofil 11 mit dem Rahmenprofil 2 von Fig. 2, auf das auf vertikal übereinander liegenden Rahmenteilen 21, 22 Kabeldichtungen 3A, 3B aufgelegt sind. Die Kabeldichtungen 3A, 3B umfassen je zwei Dichtungselemente 31, 32 bzw. 33, 34 von denen eines dem Profilrahmen 2 und das andere dem Gehäuse 4 zugewandt ist. Die vorzugsweise aus Hochtemperaturwolle gefertigten Dichtungselemente 31, 32 bzw. 33, 34 sind gut komprimierbar, so dass Kabel und Leitungen 9, deren Durchmesser sich um eine Mehrfaches voneinander unterscheiden, aufgenommen und abgedichtet werden können.

Fig. 4 zeigt die erfindungsgemässe Kabelinstallationsvorrichtung 1 mit dem Querprofil 11, dem Rahmenprofil 2, den Kabeldichtungen 3A, 3B und dem aufgesetzten Gehäuse 4, das vier Seitenwände 41, ..., 44 und eine Abdeckung 45 aufweist. Die Gehäuseteile 41, ..., 45 sind aus feuerfesten Platten gefertigt und modular zusammengefügt und z.B. mittels eines Klebstoffs miteinander verbunden. Die vorzugsweise lösbare Abdeckung 45 ist von zwei Schraubverbindungen 7 gehalten, deren Gewindestangen 73 durch die Abdeckung 45 hindurchgeführt und mit Schraubenmuttern 74 verbunden sind. Nach Entfernen der Schraubenmuttern 74 und der Abdeckung 45 erhält der Installateur Zugang zu den Befestigungsvorrichtungen 8 und kann installierte Kabel oder Leitungen 91, ..., 96 lösen oder neu eingeführte Kabel oder Leitungen 91, ..., 96 befestigen.

Fig. 5 zeigt die Kabelinstallationsvorrichtung 1 von Fig. 4 nach Entnahme der Abdeckung 45 und der oberen Seitenwand 42, die auch eine Einheit bilden können.

### Literaturverzeichnis

[1] Produktkatalog der LANZ OENSINGEN AG, Juni 2009
[2] EP1530272A1

### Bezugszeichenliste

- 1: neue Installationsvorrichtung
- 100: bekannte Installationsvorrichtung
- 11: Querprofil, Sprosse
- 110: Längsprofil
- 2: Profilrahmen
- 21, ..., 24: Rahmenelemente
- 230, 240: Durchgänge in den Rahmenelementen
- 3; 3A, 3B: Kabeldichtung
- 31, ..., 34: Dichtungselemente
- 4: Gehäuse
- 40A, 40B: Durchtrittsöffnungen
- 41, ..., 45: Gehäuseelemente
- 6: Wand
- 7: Schraubverbindung
- 70: Montageschraube
- 71: Anker
- 72: Gewindehülse
- 73: Gewindestange
- 74: Schraubenmutter
- 8: Befestigungsvorrichtung, Schnellverleger
- 81: Andruckplatte
- 82: Montagebügel
- 83: Andruckschraube
- 9: Leitungen 91, 92, ..., 96

## Patentansprüche

1. Kabelinstallationsvorrichtung (1) für Steigzonen mit Funktionserhalt im Brandfall mit einem Querprofil (11), das vereinzelt oder verbunden mit Längsprofilen (110) mit einer Gebäudewand (6) verbindbar ist und das dem Halten von Befestigungsvorrichtungen (8) dient, mittels denen die Kabel und Leitungen (9) installierbar sind, **dadurch gekennzeichnet, dass** die Befestigungsvorrichtungen (8) und das zugehörige Querprofil (11) innerhalb eines Gehäuses (4) angeordnet sind, welches aus feuerfestem Material besteht, und dass zwei Durchgangsöffnungen (40A, 40B) mit je einer Kabeldichtung (3) vorgesehen sind, die aus feuerfestem und flexiblem Material bestehen und durch die die Kabel und Leitungen (9) dicht umschlossen in das Gehäuse (4) hinein zu den Befestigungsvorrichtungen (8) und wieder aus dem Gehäuse (4) hinaus führbar sind.

2. Kabelinstallationsvorrichtung (1) nach Anspruch 1, **dadurch gekennzeichnet, dass** ein aus einem oder mehreren Rahmenelementen (21, ..., 24) bestehender Profilrahmen (2) vorgesehen ist, welcher das Querprofil (11) umrahmt und das Gehäuse (4) von der Gebäudewand (6) trennt.

3. Kabelinstallationsvorrichtung (1) nach Anspruch 1 oder 2, **dadurch gekennzeichnet, dass** das Gehäuse (4) aus einem oder mehreren Gehäuseelementen (41, ..., 45) besteht und dass auf der Oberseite (4T) und der Unterseite (4U) des Gehäuses (4) je eine der Durchgangsöffnungen (40A, 40B) angrenzend an den Profilrahmen (2) vorgesehen ist, die sich vorzugsweise von einer zur anderen Seite des Gehäuses (4) oder zwischen zwei der Gehäuseelemente (43, 44) vorzugsweise schlitzförmig erstrecken.

4. Kabelinstallationsvorrichtung (1) nach Anspruch 1, 2 oder 3, **dadurch gekennzeichnet, dass** die beiden Kabeldichtungen (3) je zwei vorzugsweise quaderförmige Dichtungselemente (31, 32; 33, 34) umfassen, von denen eines am Profilrahmen (2) und das andere am Gehäuse (4) anliegt.

5. Kabelinstallationsvorrichtung (1) nach einem der Ansprüche 1 - 4, **dadurch gekennzeichnet, dass** die Dichtungselemente (31, 32; 33, 34) aus Hochtemperaturwolle gefertigt sind, die vorzugsweise Elemente aus der Gruppe von Mineralwolle, Aluminiumoxid, Siliziumsoxid, Molut oder Korund, oder Kombinationen davon aufweist.

6. Kabelinstallationsvorrichtung (1) nach Anspruch 3, 4 oder 5, **dadurch gekennzeichnet, dass** die Durchgangsöffnungen (40A, 40B) derart dimensioniert und die Dichtungselemente (31, 32; 33, 34) derart gewählt sind, dass Kabel und Leitungen (91, 96) vorzugsweise parallel nebeneinander darin installierbar sind, deren Durchmesser sich um einen Faktor im Bereich von 10 bis 20 voneinander unterscheiden.

7. Kabelinstallationsvorrichtung (1) nach einem der Ansprüche 1 - 6, **dadurch gekennzeichnet, dass** das Gehäuse (4) oder die Gehäuseelementen (41, ..., 45) aus zementgebundenem Calciumsilicat gefertigt sind.

8. Kabelinstallationsvorrichtung (1) nach einem der Ansprüche 1 - 7, **dadurch gekennzeichnet, dass** das Gehäuse (4) einen lösbaren Deckel (45) aufweist, welcher den Zugang zu den Befestigungsvorrichtungen (7) abdeckt.

9. Kabelinstallationsvorrichtung (1) nach einem der Ansprüche 1 - 8, **dadurch gekennzeichnet, dass** die Befestigungsvorrichtungen (7) mit Gewindeteilen und/oder mit Federelementen versehen sind.

10. Kabelinstallationsvorrichtung (1) nach einem der Ansprüche 1 - 9, **dadurch gekennzeichnet, dass** das Querprofil (11) zumindest annähernd C-Profil-förmig ausgebildet ist.

11. Kabelinstallationsvorrichtung (1) nach einem der Ansprüche 1 - 10, **dadurch gekennzeichnet, dass** das Querprofil (11) auf beiden Seiten von Längsprofilen gehalten ist.

12. Kabelinstallationsvorrichtung (1) nach einem der Ansprüche 1 - 11, **dadurch gekennzeichnet, dass** das Querprofil (11) von zwei Schraubverbindungen (7) gehalten ist, die einen mit der Gebäudewand (6) verbindbaren Anker (71) aufweist, der mit einer Gewindehülse (72) verbunden ist, die gegen das Querprofil (11) drehbar ist und in die eine Gewindestange (73) eingesetzt ist, die das Gehäuse (4), vorzugsweise den Gehäusedeckel (45), durch stösst und mit einer Schraubenmutter (74) verbunden ist.
